(19) Europäisches Patentamt
European Patent Office
Office européen des brevets

(11) **EP 3 900 330 B1**

(12) **EUROPÄISCHE PATENTSCHRIFT**

(45) Veröffentlichungstag und Bekanntmachung des Hinweises auf die Patenterteilung:
**12.07.2023 Patentblatt 2023/28**

(21) Anmeldenummer: **19848772.0**

(22) Anmeldetag: **16.12.2019**

(51) Internationale Patentklassifikation (IPC):
*H04N 17/00* (2006.01)    *G01C 25/00* (2006.01)
*G01B 21/04* (2006.01)    *G06T 7/80* (2017.01)

(52) Gemeinsame Patentklassifikation (CPC):
**H04N 17/002**

(86) Internationale Anmeldenummer:
**PCT/DE2019/200147**

(87) Internationale Veröffentlichungsnummer:
**WO 2020/125876 (25.06.2020 Gazette 2020/26)**

(54) **AUFBAU UND VERMESSUNG EINES AUFBAUS ZUR KALIBRIERUNG EINER KAMERA**

ASSEMBLY AND MEASUREMENT OF AN ASSEMBLY FOR CALIBRATING A CAMERA

ÉTABLISSEMENT ET MESURE D'UNE STRUCTURE POUR L'ÉTALONNAGE D'UNE CAMÉRA

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2018 DE 102018222796**

(43) Veröffentlichungstag der Anmeldung:
**27.10.2021 Patentblatt 2021/43**

(73) Patentinhaber: **Conti Temic microelectronic GmbH**
**90411 Nürnberg (DE)**

(72) Erfinder:
• **ALEXOVSKI, Marko**
**90411 Nürnberg (DE)**
• **FRANZ, Ivan**
**90411 Nürnberg (DE)**
• **LASARUK, Aless**
**90411 Nürnberg (DE)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
**CN-B- 104 240 221**    **US-A1- 2017 374 360**

**Beschreibung**

Die Erfindung betrifft ein Vermessungssystem eines Aufbaus zur Kalibrierung einer Kamera, ein Verfahren zum Vermessen eines Kamerakalibrierungssystems, ein Computerprogramm und ein computerlesbares Medium.

Parameter einer Kamera, die zur Verwendung der Kamera als vermessendes System benötigt werden, beschreiben im Wesentlichen die Projektionsabbildung von dreidimensionalen Punkten ins Bild. Diese Parameter können während der Kamerafertigung durch einen dreidimensionalen Kalibrieraufbau mit z.B. Tafeln, auf denen Muster aufgedruckt sind, sogenannten Targets, bestimmt werden. Die Auswertung erfolgt anhand bekannter geometrischer Verhältnisse des Aufbaus und der im Bild der zu kalibrierenden Kamera detektierten Punkten des Musters. Die ermittelten Parameter beinhalten die Pfade der Lichtausbreitung innerhalb der Optik (intrinsischen Parameter) sowie die Pose (Position und Orientierung) der Optik in einem gewählten Koordinatensystem im Raum (extrinsische Parameter).

Die intrinsischen Parameter einer zu kalibrierenden Kamera werden zur Weiterverwendung gespeichert. Die extrinsischen und die intrinsischen Parameter werden gespeichert und oft weiterhin dazu verwendet, um die Anforderungen an die Optik und den Zusammenbau der Kamera am Ende der Fertigung zu untersuchen.

Eine Anforderung an die beschriebenen Kamerakalibrierungssysteme ist, dass die genau justierten Targets sowie aber auch die Lage der Kameraaufnahme sich über die Zeit hinweg nicht verstellen dürfen und auch in sich stabil sein müssen. Solche Systeme zur Kamerakalibrierung sind sehr kosten- und wartungsintensiv.

CN 1O424O221 B zeigt eine Vorrichtung und ein Verfahren zum Kalibrieren der relativen Orientierung zweier Kameras mit entgegengesetzter Blickrichtung. Die Kalibrierungsvorrichtung zur Kalibrierung des relativen Azimutwinkels der beiden Kameras umfasst einen ersten Kalibrierungsständer, einen zweiten Kalibrierungsständer und ein doppelseitiges Hilfstarget. Der erste Kalibrierungsständer und der zweite Kalibrierungsständer sind in einem bestimmten Abstand voneinander angeordnet. An dem ersten Kalibrierungsständer sind eine erste Hilfskamera und ein erstes einseitiges Ziel angeordnet, das sich unterhalb der ersten Hilfskamera befindet. Am zweiten Kalibrierungsständer sind eine zweite Hilfskamera und ein zweites einseitiges Ziel angeordnet, das sich unterhalb der zweiten Hilfskamera befindet. Das doppelseitige Hilfsziel ist zwischen dem ersten Kalibrierungsständer und dem zweiten Kalibrierungsständer in einem abnehmbaren Modus angeordnet.

US 2017/374360 A1 zeigt ein Verfahren, System und Gerät zur Durchführung einer Kamerakalibrierung, bei dem Kameras an einer sich bewegenden Transportvorrichtung angebracht werden, um Bilder eines stationären Kalibrierungstargets, das sich über mehrere Ebenen im Raum erstreckt, aufzunehmen.

Aufgabe der Erfindung ist es, einen Aufbau und ein Verfahren zur Vermessung des Aufbaus zur Kamerakalibrierung bereitzustellen, das einen einfachen und weitestgehend wartungsfreien Aufbau erlaubt.

Die Aufgabe wird durch die Gegenstände der unabhängigen Patentansprüche gelöst. Vorteilhafte Ausführungsformen sind Gegenstand der abhängigen Ansprüche, der folgenden Beschreibung, sowie der Figuren.

Unter "Aufnahme" und "aufnehmen" wird in dieser Beschreibung ausschließlich das mechanische Aufnehmen eines Gegenstandes von einer Halterung, wie z.B. einer Kamera oder eines Kameragehäuses von einem mechanischen Adapter oder mittels eines mechanischen Interfaces bzw. einer mechanischen Schnittstelle verstanden. Das fotografische Aufnehmen eines Bildes wird durchgängig durch den Begriff "erfassen" eines Bildes bzw. eines Gegenstandes wie z.B. eines Kalibriertargets ausgedrückt.

Gemäß einer Ausführungsform wird ein Aufbau zur Kalibrierung einer Kamera bereitgestellt. Der Aufbau weist folgende Elemente auf: ein Hilfstarget, eine Referenzkamera in einem Referenzkameragehäuse, einen Referenzkameraadapter zur Aufnahme des Referenzkameragehäuses oder des Hilfstargets, einen Kalibrierkameraadapter zur Aufnahme der zu kalibrierenden Kamera (Kalibrierkamera), einen ersten Positioniersockel zur Aufnahme des Referenzkameraadapters zur Erfassung eines ersten Bildes der Referenzkamera oder zur Aufnahme des Kalibrierkameraadapters, einen zweiten Positioniersockel zur Aufnahme der Referenzkamera zur Erfassung eines zweiten Bildes und mindestens ein Kalibriertarget. Das mindestens eine Kalibriertarget ist derart angeordnet, dass es von der vom ersten Positioniersockel aufgenommenen Referenzkamera oder Kalibrierungskamera erfasst werden kann. Der erste Positioniersockel ist derart angeordnet, dass das erste Bild das mindestens eine Kalibriertarget enthält. Der zweite Positioniersockel ist derart angeordnet, dass das zweite Bild von der dort aufgenommenen Referenzkamera das mindestens eine Kalibriertarget und das im ersten Positioniersockel aufgenommene Hilfstarget enthält.

Der vorgeschlagene Aufbau beinhaltet somit mindestens zwei Targets, wobei unter Targets z.B. Tafeln, auf denen Merkmale, z.B. ein Schachbrett- oder Kreismuster aufgedruckt ist, verstanden wird. Die Targets werden vorzugsweise in einem gewissen Abstand und einer gewissen Orientierung in dem Kalibrier-Raum aufgestellt, so dass sie den Bildbereich der Kalibrierkamera abdecken können. Die Referenzkamera ist vorzugsweise so montiert, dass deren Bilder möglichst vollständig mit den Mustern der Targets abgedeckt sind.

Gemäß einer vorteilhaften Ausführungsform weist der erste Positioniersockel einen ersten mechanischen Interfacetyp zur Aufnahme des Kalibrierkameraadapters oder des Referenzkameraadapters auf. Der Referenzkameraadapter weist einen zweiten mechanischen Interfacetyp zur Aufnahme des Referenzkameragehäuses oder des Hilfstargets und ein erstes Interfacegegenstück auf. Weiterhin weist der Kalibrierkameraadapter zur Aufnahme der Kalibrierkamera ein erstes Interfacegegenstück, der zweite Positioniersockel einen zweiten mechanischen Interfacetyp zur Aufnahme des Referenzkameragehäuses auf.

Sofern vorgesehen, weist ein dritter Positioniersockel den zweiten mechanischen Interfacetyp auf.

Das Hilfstarget und das Referenzkameragehäuse können somit von demselben Adapter, dem Referenzkameraadapter, aufgenommen werden. Der weitere Adapter, d.h. der Kalibrierkameraadapter, nimmt die Kalibrierkamera auf. Beide Adapter passen aufgrund desselben Interfacetyps, d.h. des ersten Interfacetyps, auf den ersten Positioniersockel. Durch den speziellen Adapter für die Referenzkamera, der zu dessen Aufnahme den zweiten Interfacetyp aufweist, der identisch mit dem Interfacetyp des weiteren Positioniersockels ist, kann die Referenzkamera auf alle verfügbaren Positioniersockel aufgesetzt werden.

Die einzelnen Komponenten, d.h. Referenzkameragehäuse, Interfaces der Adapter und des Positioniersockels, sowie der Adapter zur Aufnahme der Kalibrierkamera weisen hierbei jeweils eine bestimmte relative Lage bzw. Orientierung zueinander auf, die durch eine Vermessung, z.B. beim Aufbau des Systems bestimmt werden kann. Ein Referenzkoordinatensystem kann hierbei z.B. durch eine Ecke und die daran anschließenden Kanten des Referenzkameragehäuses aufgespannt werden. Alle Positionen und Orientierungen des Aufbaus können auf dieses Referenzkoordinatensystem bezogen werden. Somit können insbesondere das Gehäuse der Referenzkamera und das Gehäuse und Optik einer idealen Kalibrierkamera in geometrische Beziehung zueinander gesetzt werden.

Das Hilfskalibriertarget kann vorzugsweise auf einem Würfel, der über den Referenzkameraadapter auf dem ersten Positioniersockel befestigt wird, also dem Positioniersockel, in den später eine zu kalibrierende Produktkamera eingesetzt wird, aufgebracht sein.

Bei dem Aufbau ist somit eine geometrische Beziehung zwischen den verschiedenen Komponenten vorhanden. Vorzugsweise weist das Gehäuse der Referenzkamera gegenüber dem ersten Positioniersockel aufgrund des Adapters bzw. der Interfaces eine Pose auf. Diese Pose ändert sich über die Zeit nicht, und kann z.B. durch taktile Vermessung im Voraus bestimmt werden und kann somit als bekannt vorausgesetzt werden. Entsprechend kann eine Pose zwischen dem Gehäuse bzw. Optik einer idealen Kalibrierkamera und dem ersten Positioniersockel bestimmt und als bekannt vorausgesetzt werden. Bei vorausgesetzter unveränderter Lager der Aufnahmekomponenten ist somit eine bestimmte unveränderliche und bekannte geometrische Beziehung zwischen der Referenzkamera und einer idealen Kalibrierkamera in einem Sub-System bestehend aus Referenzkamera, erstem Positioniersockel und Kalibrierkamera vorhanden.

Gemäß einer bevorzugten Ausführungsform weist der Aufbau zwei oder mehr Kalibriertargets (z.B. ebene Schachbrettmuster) auf, die zueinander nicht ko-planar angeordnet sind. Dadurch wird eine mehrdeutige (degenerierte) räumliche Szene vermieden (siehe weitere Ausführungen). Vorteilhafterweise sind die Kalibriertargets jeweils eindeutig identifizierbar, z.B. durch entsprechende Codierungen. Bei einer Mehrzahl an Targets kann also jedes Kalibriertarget zu seiner Identifizierung jeweils ein Identifizierungsmuster aufweisen.

Vorzugsweise sind der erste und der zweite Positioniersockel derart angeordnet und konfiguriert, dass bei einer Aufnahme der Referenzkamera im ersten (über den Referenzkameraadapter) verglichen mit einer Aufnahme im zweiten Positioniersockel jeder der sechs räumlichen Freiheitsgrade der Pose der Referenzkamera einen (hinreichenden) Unterschied aufweist. Auch diese Option dient der Vermeidung von Mehrdeutigkeiten, hier jedoch bezogen auf die Lage und Orientierung der Referenzkamera in den beiden unterschiedlichen Positionen. Die Lage der Kameras sollte vorzugsweise nicht einer sogenannten "kritischen Bewegung" entsprechen.

Ein erstes Verfahren zum Vermessen eines Aufbaus zur Kalibrierung einer zu kalibrierenden Kamera weist die folgenden Schritte auf:

Positionieren einer Referenzkamera auf einem ersten Positioniersockel;
Erfassen eines ersten Bildes des mindestens einen Kalibriertargets mittels der Referenzkamera;
Positionieren eines Hilfstargets auf dem ersten Positioniersockel;
Positionieren der Referenzkamera auf einem zweiten Positioniersockel;
Erfassen eines zweiten Bildes des mindestens einen Kalibriertargets und des Hilfstargets mittels der Referenzkamera;
Bestimmen der Pose des Hilfstargets zu dem mindestens einen Kalibriertarget durch Auswerten des zweiten Bildes; und
Bestimmen von unbekannten Parametern der Referenzkamera durch Auswerten des ersten und des zweiten erfassten Bildes, wobei die extrinsischen Parameter aus dem ersten Bild und der relativen Pose des Hilfstargets gegenüber dem ersten Kalibriertarget im zweiten Bild ermittelt werden.

Die Pose des Hilfstargets im zweiten Bild gibt Aufschluss über die Pose der Referenzkamera beim Erfassen des ersten Bildes. Unter Berücksichtigung dieser Information können weitere unbekannte Parameter der Referenzkamera durch Auswertung des ersten erfassten Bildes bestimmt werden.

Gemäß einer vorteilhaften Ausgestaltung des Verfahrens werden die realen Abmessungen des Aufbaus aus erstem Positioniersockel, Interfaces, Referenzkameraadapter, Hilfstarget und Referenzkamera vor dem Erfassen der Bilder mit der Referenzkamera vermessen. So können durch Vergleich der soweit bekannten realen Abmessungen die aus den Auswertungen der Bilder der Referenzkamera ermittelten Abmessungen Parameter der Referenzkamera optimiert werden.

Es wird zunächst eine Ausführung des obigen Verfahrens diskutiert, bei der die intrinsischen und die extrinsischen Parameter der Referenzkamera gegenüber dem Referenzkameragehäuse bekannt sind. Eine Aufnahme eines zweiten Bildes ist für die diskutierte Ausführung vorteilhaft aber nicht notwendig. Bei einer vorteilhaften Beschaffung der Muster sowie einer vorteilhaften Anordnung der Muster im Raum wird bereits aus dem erfassten Muster der Targets im ersten Bild der Referenzkamera die Schätzung der Pose der Muster(punkte) zueinander auf die weiter unten beschriebene Art und Weise möglich. In einer weiteren Ausführung kann dies durch die Hinzunahme von Nebenwissen über den Aufbau, wie z.B. abgemessene Größe und/oder Planarität der Muster erfolgen. Besonders vorteilhaft ist es dabei Nebenwissen über die Abmessungen des vorzugsweise hochgenau hergestellten Hilfstargets zu berücksichtigen. Weiterhin ist die Pose der Referenzkamera zum ersten Target und somit aufgrund der bekannten Pose der Referenzkamera zum Referenzkameragehäuse (extrinsische Kalibrierung) die Pose des ersten Sockels und somit der Optik einer idealen Kalibrierkamera zum ersten Target schätzbar. Sind mehrere Targetmuster vorhanden und durch das erste Bild erfasst, so ist auch die gegenseitige Beziehung dieser Muster, also eine Vermessung des Aufbaus möglich. Mit den erhaltenen Informationen ist es möglich, die intrinsischen aber auch die extrinsischen Parameter einer zu kalibrierenden Kamera in dem gegebenen Aufbau zu ermitteln.

Letzterer Fall beschreibt eine übliche bzw. naheliegende Ausführung von optischen Systemen zur Vermessung von Kalibrieraufbauten. Es werden nun Ausführungsformen der Erfindung vorgestellt, in denen die Annahmen über die bekannten Parameter der Referenzkamera reduziert sind.

Es wird als nächstes eine Ausführungsform der Erfindung diskutiert, bei der nur die intrinsischen Parameter der Referenzkamera bekannt sind.

Wie zuvor, ist bei einer vorteilhaften Beschaffung der Muster sowie einer vorteilhaften Anordnung der Muster im Raum aus den Bildern der durch die Referenzkamera erfassten Muster der Targets die Schätzung der Lage der Targets zueinander auf die weiter unten beschriebene Art und Weise möglich.

Nach obiger Beschreibung wird in dieser Ausführung ein zweites Bild der Referenzkamera vom zweiten Positioniersockel erfasst. Dabei wird das Hilfstarget auf dem ersten Positioniersockel mit Hilfe des Referenzkameraadapters aufgenommen. Damit erfasst die Referenzkamera im zweiten Bild sowohl das erste Kalibriertarget als auch das Hilfstarget, was die Schätzung der relativen Pose dieser Targets zueinander möglich macht. Auf diese Weise erhält man somit aufgrund der bekannten Pose zwischen dem Referenzkamergehäuse und dem Hilfstarget die Pose des Referenzkameragehäuses gegenüber dem ersten Kalibriertarget. Mit Hinzunahme der Pose der Referenzkamera zum ersten Kalibriertarget aus dem ersten Bild erhält man die Pose der Referenzkamera zum Referenzkameragehäuse, also die extrinsischen Parameter der Referenzkamera. Durch die Aufnahmen aus mehreren Ansichten und durch das geschickte Verfahren hat man also die diskutierte Ausführung auf den ersten beschriebenen Fall aller bekannten Parameter der Referenzkamera zurückgeführt. Das Vermessungssystem kalibriert sich also selbst extrinsisch. Da bei diesem Verfahren die Pose der Referenzkamera im zweiten Sockel gegenüber (allen Targets in) dem Aufbau ermittelt wird, muss der zweite Sockel vorzugsweise nicht wiederholgenau konstruiert werden.

Nachdem die Geometrien bekannt sind, können aus dem ersten Bild alle Parameter der Kalibrierkamera z.B. auf die weiter unten erläuterte Weise geschätzt werden.

Es wird nun eine weitere Ausführungsform der Erfindung vorgestellt, bei der sowohl die intrinsischen als auch die extrinsischen Parameter der Referenzkamera unbekannt sind.

Gemäß einer Ausführungsform kann man auf weiter unten beschriebene Weise aus den zwei Aufnahmen des zuletzt beschriebenen Verfahrens unter der Annahme bekannter Geometrie (z.B. der bekannten Größe der Muster und/oder Planarität der Targets) die unbekannten intrinsischen Parameter der Referenzkamera schätzen. Für ein robustes System ist es allerdings empfehlenswert die folgend beschriebene Ausführungsform zu verwenden.

Gemäß einer Ausführungsform weist das Vermessungssystem einen dritten Positioniersockel auf, derart angeordnet, dass die von dem dritten Positioniersockel aufgenommene Referenzkamera das von dem ersten Positioniersockel aufgenommene Hilfstarget und das mindestens eine Kalibriertarget in einem dritten Bild erfassen kann. Wird die Referenzkamera also auf den dritten Positioniersockel gesetzt, können das Kalibriertarget und das Hilfstarget von einer weiteren Position aus erfasst werden, wodurch die Genauigkeit der Kalibrierung des Systems erhöht wird. Neben der Erhöhung der Genauigkeit kann aus den in den drei Bildern (erstes Bild ohne Hilfstarget, Referenzkamera auf dem ersten Sockel; zweites und drittes Bild mit Hilfstarget, Referenzkamera auf dem zweiten bzw. dritten Sockel) sichtbaren Mustern durch die nachfolgend beschriebene Methode auch die intrinsische und extrinsische Kalibrierung der Referenzkamera ermittelt werden. Dies kann unter den bisher genannten Bedingungen über die Lage der Muster und Referenzkamerapositionen mit sehr wenig Annahmen über die Maße des Aufbaus erfolgen. Es ist lediglich notwendig, dass eine Entfernung (z.B. die Länge des Kalibriermusters auf dem ersten Kalibriertarget) des realen physikalischen Aufbaus bekannt ist. Der vorgestellte Fall kann dann also auf den ersten zurückgeführt werden, indem sich das System selbst intrinsisch und extrinsisch kalibriert. Damit können große Abweichungen in den optischen Parametern der Referenzkamera (z.B. Tausch der Optik) toleriert werden ohne die Referenzkamera weiter zu warten.

Das System stellt somit eine Anordnung bereit, die es erlaubt, über die Auswertung der erfassten Bilder den Aufbau zu vermessen, der zur Kamerakalibrierung vorgesehen ist. In der beschriebenen weiteren Ausführungsform wird ein System bereitgestellt, das sich selbst kalibriert. Es sei hier angemerkt, dass es sich hierbei um die Vermessung des Aufbaus handelt, weshalb die später zu kalibrierende Produktkamera nicht in das Verfahren miteinbezogen ist. Durch die Vermessung des Aufbaus findet vielmehr eine Eichung des Aufbaus statt, die eine definierte Umgebung für eine nachfolgende Kamerakalibrierung ermöglicht. Durch die Vermessung können kleinere, unerwünschte Veränderungen des Aufbaus, die sich z.B. durch Umgebungseinflüsse oder gewöhnliche Materialveränderungen über die Zeit ergeben, ausgeglichen werden, ohne dass eine Neujustierung oder gar ein Austausch der Targets erfolgen muss.

Gemäß einer weiteren Ausführungsform weisen die Kalibriertargets des Kamerakalibrierungsvermessungssystems zu ihrer Identifizierung jeweils ein Identifizierungsmuster auf. Dies erlaubt, dass Targets bis auf die Identifizierungsmuster identische Muster wie z.B. ein Schachbrett- oder Kreismuster aufweisen können, und die verschiedenen Targets auf den erfassten Bildern dennoch unterschieden und identifiziert werden, so dass auch jedes Element der Muster auf allen Targets genau identifiziert werden kann. Die Identifizierungsmuster können beispielsweise Punkte oder andere geometrische Formen in vorbestimmten Musterelementen, wie z.B. den Quadraten, sein. Weitere Möglichkeiten wären eine Kodierung durch Farben oder Graustufen, QR-Codes, etc.

Der vorgestellte Aufbau erlaubt es durch die Vermessung der Komponenten eine Reihe von Störungen des Aufbaus oder der Kamera zu detektieren.

Der erste Positioniersockel und die Kalibriertargets sind die Komponenten in dem System, die über die Zeit am ehesten Veränderungen erfahren. Die Kalibriertargets können zum Beispiel durch Umgebungseinflüsse wie Feuchtigkeit und Temperatur eine Alterung erfahren, die sich z.B. in einer mechanischen Verformung bemerkbar macht. Der erste Positioniersockel kann sich durch häufige Wechsel der Kalibrierkameras verstellen. Im Gegensatz hierzu wird die Referenzkamera nur in größeren zeitlichen Abständen dem zweiten Positioniersockel entnommen, so dass die Pose des zweiten Positioniersockels über einen relativ langen Zeitraum stabil bleibt.

Sind Veränderungen am Aufbau, etwa aufgrund einer Veränderung der ermittelten Parameter oder Qualitätsmaße, festgestellt worden, so kann der Aufbau neu justiert werden und das Kalibriertarget erneut mit der Referenzkamera von dem ersten Positioniersockel aus erfasst werden.

Gemäß einer Ausführungsform weist das Vermessungssystem eine Auswerteeinheit auf, die zur Bestimmung der Ausrichtung des Kalibriertargets und des Hilfstargets und zur Bestimmung der unbekannten Parameter der Referenzkamera durch Auswertung zumindest des ersten und des zweiten Bildes eingerichtet ist. Die Auswerteeinheit, die drahtgebundene oder drahtlose Kommunikationsschnittstellen zu der Referenzkamera bzw. der zu kalibrierenden Kamera aufweisen kann, ist typischerweise ein Computer, bzw. eine einen Prozessor aufweisende Recheneinheit, die die Raumpunkte mit den für die Kalibrierung spezifizierten Bildpunkten in Beziehung setzt und die Kalibrierung gemäß z.B. einer Rechenvorschrift wie die nachfolgend beschrieben vornimmt.

Es wird zunächst der Fall diskutiert, wie eine Kamera in einem vermessenen Aufbau kalibriert wird. Dies ist der Fall nachdem die Vermessung des Aufbaus dem hier vorgestellten System erfolgt ist. Auf diese Weise wird z.B. die Produktkamera kalibriert.

Sei das Projektionsmodell der Kamera gegeben durch die parametrisierbare Abbildung k, sodass ein jeder Bildpunkt p zum Raumpunkt s die Gleichung

$$p = k(s, \theta),$$

erfüllt, wobei $\theta$ ein Vektor von Parametern ist, welcher die jeweilige physikalische Kamera modelliert. Da die Lage der Kalibriermuster zueinander und somit die Lage der Markierungen auf den Mustern im Raum, und die Lage des ersten Positioniersockels zu dem ersten Kalibriermuster bekannt ist, können die Kalibrierparameter durch das Minimieren von

$$l(\theta) = \sum_i \|p_i - k(s_i, \theta)\|^2$$

berechnet werden, wobei $s_i$ die Raumpositionen jedes Punktes i eines Merkmals (z.B. Ecken eines Quadrats) und $p_i$ die dazugehörigen Bildpunkte darstellen.

Mitunter ist hierbei die (virtuelle) Pose der Optik gegenüber dem Referenzkoordinatensystem des Aufbaus, z.B. dem Zentrum des ersten Targets bzw. den Punkten darauf, ein Ergebnis. Da die Pose des ersten Positioniersockels zum Referenzkoordinatensystem bekannt ist, ist auch die Pose der Optik gegenüber dem ersten Positioniersockel bekannt und damit auch dem Kameraadapter der zu kalibrierenden Kamera.

Die Qualität der gefundenen Kalibrierparameter ist dafür entscheidend, ob die Kamera z.B. an den Kunden ausgeliefert werden kann, oder ob eine Störung der Kamera oder des Aufbaus vorliegt. Im positiven Fall werden die Parameter in eine Datenbank mit Kalibrierparametern für die Kamera eingetragen und die Kamera ausgeliefert. In letzterem Fall muss z.B. der Aufbau neu justiert werden. Neben der Prüfung der Parameter auf vorher festgelegte Grenzen, ist ein vorzugsweiser Qualitätswert I(theta).

In einer Ausführungsform der Erfindung wird die intrinsisch und extrinsisch kalibrierte Referenzkamera im ersten Referenzsockel unter der Annahme eines kalibrierten Aufbaus aus dem ersten Bild ausgewertet. Weichen die Werte der Qualitätsparameter zu stark von den erwarteten ab, so muss die vollständige Aufbauvermessung durchgeführt werden, die als nächstes beschrieben wird.

Gemäß einer Ausführungsform wird ein Verfahren zum Vermessen eines Kamerakalibrierungsaufbaus bereitgestellt, aufweisend die Schritte:

- Positionieren der Referenzkamera auf dem ersten Positioniersockel,
- Erfassen eines ersten Bildes des mindestens einen Kalibriertargets,
- Positionieren des Hilfstargets auf dem ersten Positioniersockel,
- Positionieren der Referenzkamera auf dem zweiten Positioniersockel,
- Erfassen eines zweiten Bildes des mindestens einen Kalibriertargets und des Hilfstargets,
- Positionieren der Referenzkamera auf dem dritten Positioniersockel,
- Erfassen eines dritten Bildes des mindestens einen Kalibriertargets und des Hilfskalibriertargets,
- Bestimmen von allen unbekannten Parametern der Referenzkamera, der Pose aller Targets des Aufbaus im Referenzkoordinatensystem des Aufbaus, sowie der Pose des ersten Sockels im Referenzkoordinatensystem,
- sowie Ermitteln von Qualitätswerten der ermittelten Parameter des Aufbaus, und
- Speichern der Parameter, wenn der Qualitätswert einer Vorgabe entspricht.

Durch das Verfahren wird zunächst durch das Erfassen des ersten Bildes mit der Referenzkamera auf dem ersten Positioniersockel ein Referenzbild des Kalibriertargets erstellt. Im nächsten Schritt wird statt der Referenzkamera das Hilfstarget auf den ersten Positioniersockel gesetzt und die Referenzkamera auf den zweiten Positioniersockel, um von diesem aus das zweite Bild von dem Hilfstarget und dem Kalibriertarget zu erfassen. Bekannt sind bereits durch z.B. eine vorausgegangene taktile Vermessung die Posen des Subsystems, bestehend aus Interfaces, Adapter, Referenzkamera, Kalibrierkameraadapter und erstem Positioniersockel bzw. Hilfstarget. Durch das zweite Bild kann nun weiterhin die Pose des Kalibriertargets zu dem Hilfstarget bzw. damit auch dem Positioniersockel ermittelt werden. Mit diesen Informationen aus den beiden Bildern können auch die extrinsischen Parameter der Referenzkamera berechnet werden.

Dem Verfahren dieser Ausführungsform liegen somit mindestens zwei Kalibriertargets für die Vermessung des Aufbaus und Bestimmung der extrinsischen Parameter zugrunde, die von mindestens zwei Positioniersockel-, bzw. Kamerapositionen aus mit einer jeweiligen Ausrichtung erfasst werden und die Erfassung von einem dritten Bild von einem dritten Positioniersockel zur Bestimmung der unbekannten Parameter der Referenzkamera. Hierbei können zum Aufbau weitere Targets bzw.

Positioniersockelpositionen hinzugefügt werden, die zur Verbesserung der Genauigkeit beitragen.

Da das Verfahren zur Aufbauvermessung wiederholt angewandt wird (z.B. einmal in der Woche), kann die Berechnung der intrinsischen Parameter iterative erfolgen, wobei die intrinsischen Parameter jeweils durch eine neue Messung korrigiert werden.

Um zu bestimmen, ob die ermittelten Parameter des Aufbaus fehlerhaft sind, bzw. ob sie zu große Fehler aufweisen, werden Qualitätskriterien herangezogen. Die berechneten Qualitätswerte werden z.B. mit einem Schwellenwert verglichen. Wird ein Qualitätskriterium erfüllt, werden die Werte der Parameter des Aufbaus gespeichert und können für die Kalibrierung der Produktkameras verwendet werden. Andernfalls muss ermittelt werden, ob die Referenzkamera einer Störung unterliegt oder ob der Aufbau signifikant verstellt ist.

Ändert sich, z.B. im Laufe der Zeit, die Geometrie oder verformt sich das Kalibriertarget, wird das anhand der Vermessung des Aufbaus erkannt und kann bis zu einem gewissen Grad rechnerisch ausgeglichen werden. Das zweite Bild kann beispielsweise vor jedem Kamerakalibriervorgang oder zumindest in bestimmten zeitlichen Abständen erfasst werden.

Gemäß einer Ausführungsform wird ein Programmelement bereitgestellt, das, wenn es auf einer Steuereinheit eines Computers ausgeführt wird, das Auswerten der Bilder und Bestimmen der ersten Position relativ zu den zwei Kalibriertargets durch Auswertung der erfassten Bilder gemäß den vorgestellten Verfahren durchführt.

Gemäß einer Ausführungsform ist das Programmelement auf einem computerlesbaren Medium gespeichert.

Die Erfindung wird im Folgenden anhand von Ausführungsbeispielen und mittels der Figuren detailliert erklärt.

Fig. 1 zeigt eine Seiten- und Frontansicht einer Referenzkamera gemäß einem Ausführungsbeispiel der Erfindung.

Fig. 2 zeigt ein Kalibriertarget gemäß einem Ausführungsbeispiel der Erfindung.

Fig. 3 zeigt einen Kameraadapter gemäß einem Ausführungsbeispiel der Erfindung.

Fig. 4 zeigt eine Anordnung der Adapter und Positioniersockel gemäß einem Ausführungsbeispiel der Erfindung.

Fig. 5 zeigt eine Anordnung der Positioniersockel und Targets gemäß einem Ausführungsbeispiel der Erfindung.

Fig. 6 zeigt Kalibriertargets aus Sicht des ersten Positioniersockels gemäß einem Ausführungsbeispiel der Erfindung.

Fig. 7 zeigt eine Anordnung von Positioniersockeln gemäß einem Ausführungsbeispiel der Erfindung.

Fig. 8 zeigt Kalibriertargets aus Sicht des zweiten Positioniersockels gemäß einem Ausführungsbeispiel der Erfindung.

Fig. 9 zeigt ein Flussdiagramm des Kamerakalibrierungsvermessungsverfahren gemäß einem Ausführungsbeispiel der Erfindung.

Fig. 10 zeigt die Relation von Bild- und Raumpunkten gemäß einem Ausführungsbeispiel der Erfindung.

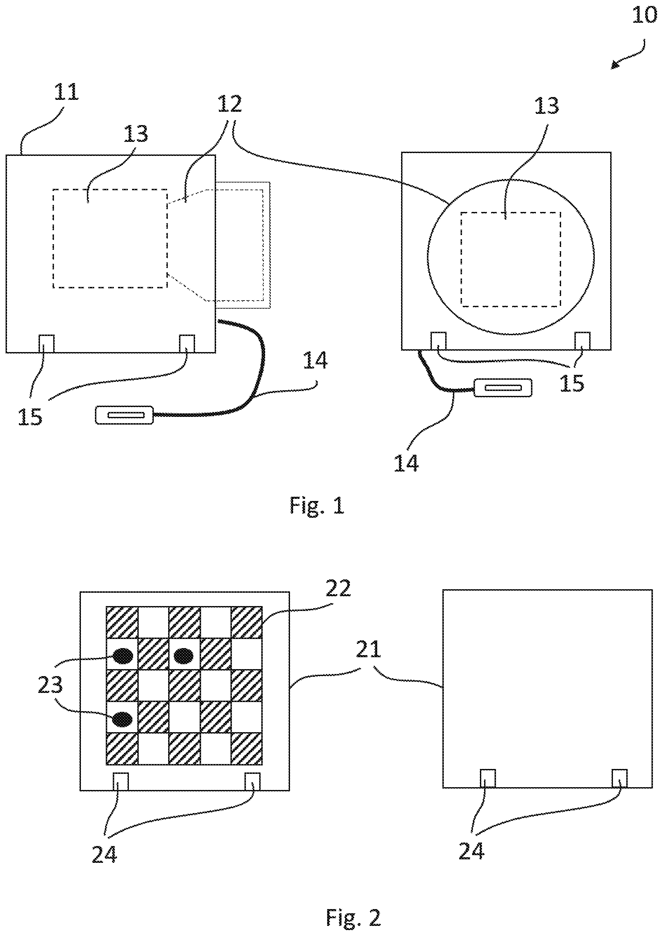

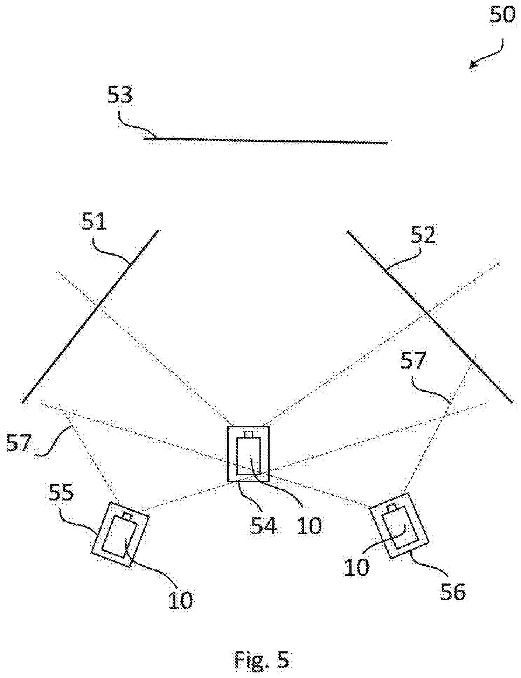

Fig. 1 zeigt zunächst eine Seitenansicht und eine Frontansicht der Referenzkamera 10. Diese kann in einem Ausführungsbeispiel in ein rechteckiges Gehäuse 11 eingebettet sein. Die Referenzkamera 10 im Referenzkameragehäuse besteht aus der Optik 12, aus dem Imagergehäuse mit Elektronik 13, dem Anschluss 14 und besitzt ein mechanisches Interface 15 eines zweiten Interfacetyps, um die Referenzkamera 10 im Aufbau festzuhalten. Hierfür ist das Interface 15 passend zur Aufnahme durch einen Positioniersockel gestaltet. Diese Art von (zweitem) Positioniersockel wird an den in Fig. 5 gezeigten Positionen 55 und 56 eingesetzt. Alternativ wird das Interface 15 durch ein Referenzkameraadapter 40 aufgenommen. Das Gehäuse wird hochgenau taktil vermessen und die Pose der Ecken gegenüber dem Interface 15 ermittelt.

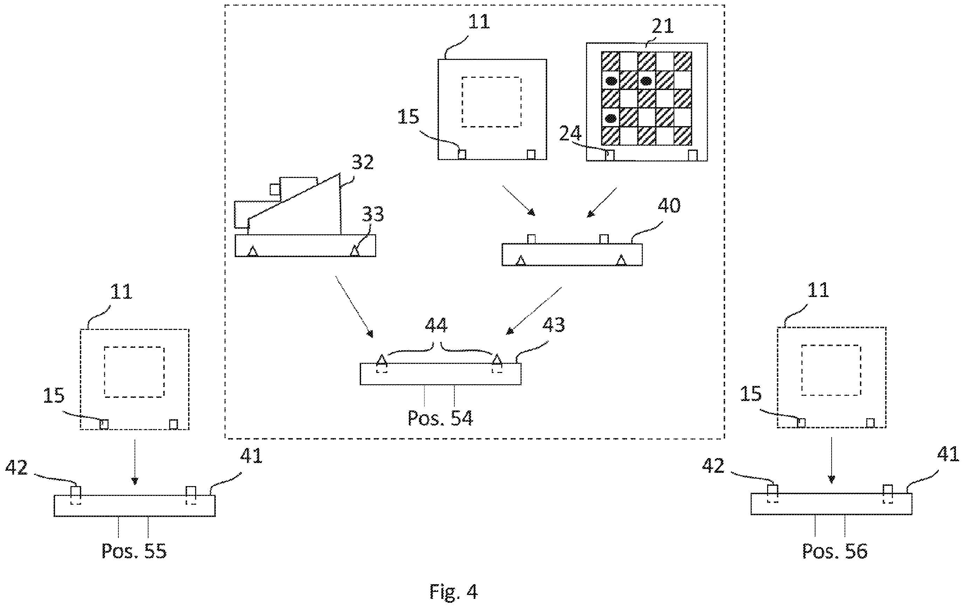

Fig. 2 zeigt gemäß einem Ausführungsbeispiel das Kalibriermuster eines Hilfstargets 21 in Form eines Würfels. Der Würfel besitzt auf einigen Seiten ein Schachbrettmuster 22, sowie eine eindeutige Kodierung 23, welche die Seite des Würfels eindeutig identifiziert. Ein Beispiel einer solchen Kodierung ist eine Abwandlung vom QR-Code, wie durch die Skizze angedeutet. Weiterhin besitzt der Würfel ein mechanisches Interface 24, das zu dem Interface 15 der Referenzkamera 10 identisch ist (zweiter Interfacetyp, dargestellt als Quadrat). Das Kalibriermuster wird hochgenau optisch im Bezug zu den Referenzkanten des Würfels vermessen und die Pose, also Position und Orientierung der Referenzkanten wird gegenüber dem Interface 24 taktil ermittelt. Das Hilfstarget 21 kann mittels eines mechanischen Adapters wie der in Fig. 4 gezeigte Referenzkameraadapter 40 auf den ersten Positioniersockel 43 aufgesetzt werden.

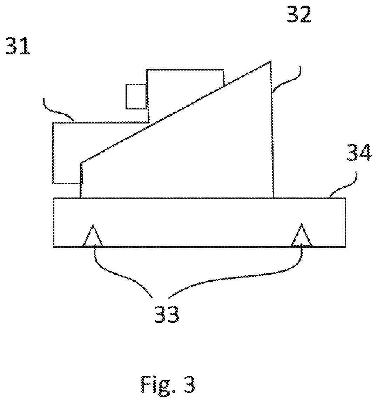

Fig. 3 zeigt gemäß einem Ausführungsbeispiel schematisch einen (Kamera-) Adapter 34 mit einem Gehäuse 32, in das eine zu kalibrierende Kamera 31, d.h. eine Produktkamera, eingesetzt werden kann. Der Kameraadapter 34 weist ein mechanisches Interface(-gegenstück) 33 eines ersten Interfacetyps auf, das auf ein in Fig. 4 gezeigtes Interface 44 des ersten Positioniersockels 43 aufgesetzt werden kann. Der erste Interfacetyp ist in den Figuren 3 und 4 symbolisch als Dreieck dargestellt.

Fig. 4 zeigt schematisch an den Positionen 55 und 56 einen zweiten Positioniersockel 41 mit einem Interface 42 (zweiten Typs), das das Gegenstück zu dem Interface 15 bildet. Das Referenzkameragehäuse 11 kann somit auf den zweiten Positioniersockel 41 an der zweiten Position 55 oder der dritten Position 56 aufgesteckt werden. Das Referenzkameragehäuse 11 bzw. - modul 10 kann über das Interface zweiten Typs 15 auf einen Referenzkameraadapter 40 aufgesteckt werden. Referenzkameragehäuse 11 und Referenzkameraadapter 40 werden auf den ersten Positioniersockel 43 an der Position 54 aufgesteckt werden (Interface ersten Typs 44). In der ersten Position 54 wird durch die Referenzkamera 10 das erste Bild erfasst. Für das zweite (und ggfs. dritte) Bild wird das Hilfstarget 21 auf den Referenzkameraadapter 40 (an der ersten Position 54) gesteckt und die Referenzkamera auf 10 den (zweiten) Positioniersockel 41 an der zweiten Position 55 (ggfs. dritten Position 56) gesteckt.

Der erste Positioniersockel 43 stellt eine besondere Ausbildungsform eines Positioniersockels dar und wird an der in Fig. 5 gezeigten mittleren Position 54 (bei drei Positioniersockeln eingesetzt). Er kann sowohl die Produktkamera 31 im Gehäuse 32 aufnehmen als auch über den Adapter 40 die Referenzkamera 11 und den Würfel 21 mit dem Hilfstarget.

Fig. 5 zeigt gemäß einem Ausführungsbeispiel eine Anordnung mit drei Kalibriermustern 51, 52, 53 und drei Positioniersockeln 54, 55, 56, die zur Befestigung einer Referenzkamera 10 oder weiterer Elemente eingerichtet sind, von oben. Durch die gestrichelten Linien 57 in Fig. 5 sind die Sichtfelder der Referenzkamera 10 angedeutet, wenn diese in den Positioniersockeln 43, 41 an den Positionen 54, 55, 56 eingesetzt wird. Die Positioniersockel 41 an der zweiten und dritten Position 55, 56 weichen im Abstand, in der Höhe, sowie in den Koordinatenachsen gegenüber der mittleren Lage 54 und untereinander signifikant ab.

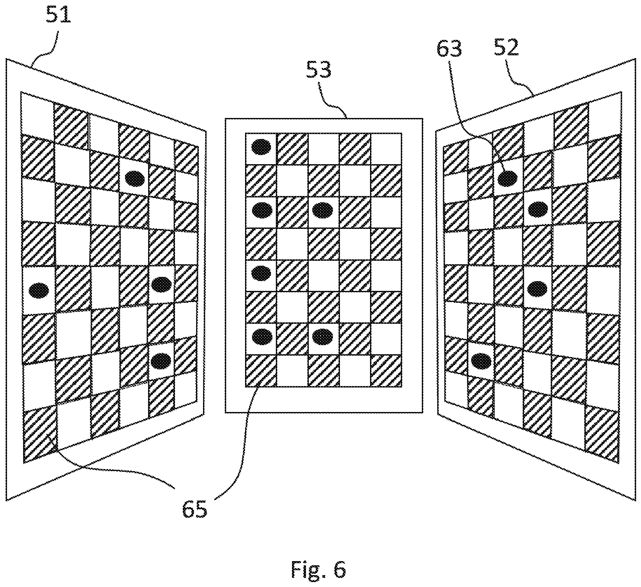

Fig. 6 zeigt gemäß einem Ausführungsbeispiel die Anordnung der drei Kalibriertargets 51, 52, und 53 aus der Sicht der zu kalibrierenden Kamera bzw. der Referenzkamera 10, wenn letztere auf der mittleren Position 54 befestigt ist. Man beachte, dass auf den Targets Markierungen 63 angebracht sind, welche das jeweilige Target sowie die Lage des Targetmusters eindeutig identifizieren. Das Bild der zu kalibrierenden Kamera sowie der Referenzkamera 10 wird vollständig durch das Kalibriermuster in Fig. 6 abgedeckt. Weiterhin soll in den Bildern der Referenzkamera 10 jedes (für Kalibrierung einer zu testenden Kamera relevante) Kästchen 65 der Targets in mindestens zwei Ansichten sichtbar sein.

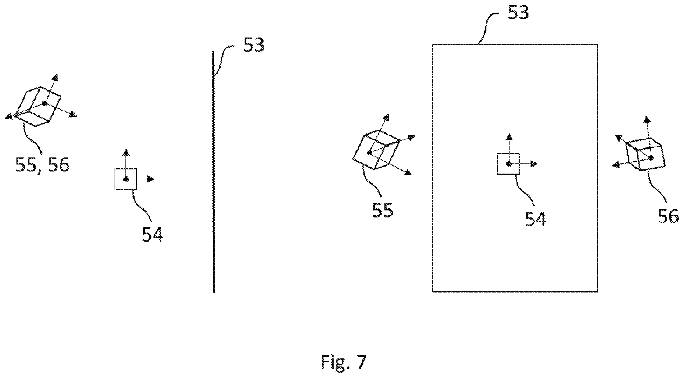

Eine vorzugsweise Anordnung, der Übersichtlichkeit halber mit nur einem Target 53, ist in Fig. 7 in zwei unterschiedlichen Ansichten skizziert. Der linke Teil der Fig. 7 zeigt eine Sicht von der rechten Seite auf die Anordnung, während der rechte Teil der Fig. 7 eine Sicht von der Vorderseite aus auf die Anordnung zeigt. Aus der Figur ist ersichtlich, dass die Positionen 55 und 56 weiter von den Kalibriermustern 51, 52, 53 entfernt und höher als der Positioniersockel 54 angeordnet sind und in allen Koordinatenachsen leicht verdreht sind.

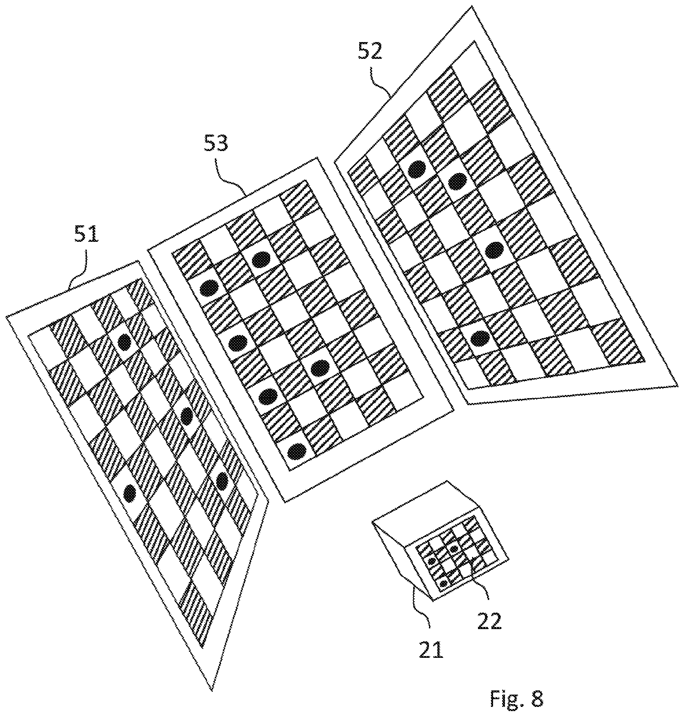

Fig. 8 zeigt gemäß einem Ausführungsbeispiel schematisch die Sicht der Referenzkamera 10 von dem zweiten Positioniersockel 41 an Position 55 auf die Kalibriertargets 51, 52, 53. Aus ihrer Sicht sind die Kalibriertargets 51, 52 und 53 sowie das Hilfstarget, bzw. der Würfel 21, der das Muster 22 aufweist, zu sehen. Der Positioniersockel 55 ist gegenüber dem Koordinatensystem des Raums in allen drei Achsen nicht rechtwinklig gedreht, wodurch die in Fig. 8 gezeigte schiefe Perspektive entsteht.

Die oben beschriebene Anordnung kann, je nach Aufgabenstellung, in der Anzahl und Orientierung der Muster variieren.

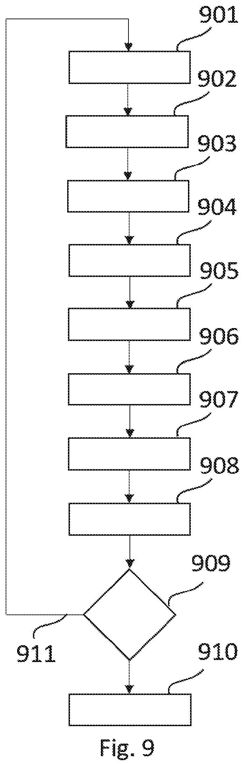

Die Prozedur der Aufbauvermessung gemäß einem Ausführungsbeispiel ist in dem Flussdiagramm in Fig. 9 abgebildet. Die Referenzkamera 10 wird nacheinander auf die Positioniersockel 54, 55 sowie optional 56 aufgesetzt. Wenn sich die Referenzkamera 10 auf den Positionen 55 oder 56 befindet, wird der Würfel auf den Positioniersockel 54 positioniert. Gemäß dem in Fig. 9 gezeigten Flussdiagramm werden folgende Schritte durchgeführt:

- Positionieren 901 der Referenzkamera auf dem ersten Positioniersockel,
- Erfassen 902 eines ersten Bildes des mindestens einen Kalibriertargets,
- Positionieren 903 des Hilfstargets auf dem ersten Positioniersockel,
- Positionieren 904 der Referenzkamera auf dem zweiten Positioniersockel,
- Erfassen 905 eines zweiten Bildes des mindestens einen Kalibriertargets und des Hilfstargets,
- Positionieren 906 der Referenzkamera (10) auf dem dritten Positioniersockel,
- Erfassen 907 eines dritten Bildes des mindestens einen Kalibriertargets und des Hilfskalibriertargets,
- Bestimmen 908 der Ausrichtung und der Position des mindestens einen Kalibriertargets relativ zu dem ersten Positioniersockel durch Auswerten des ersten Bildes, und Bestimmen der extrinsischen Parameter der Referenzkamera aus dem ersten Bild und der relativen Ausrichtung und der Position des ersten Positioniersockels durch Auswerten des ersten und des zweiten erfassten Bildes,
- Ermitteln 909 eines Qualitätswertes der intrinsischen Parameter, und
- Speichern 910 der intrinsischen Parameter, wenn der Qualitätswert einer Vorgabe entspricht.

Führt der Qualitätstest in 909 zu einem negativen Ergebnis, werden die Schritte 901 bis 908 für z.B. nach einer Neujustierung nochmals durchgeführt.

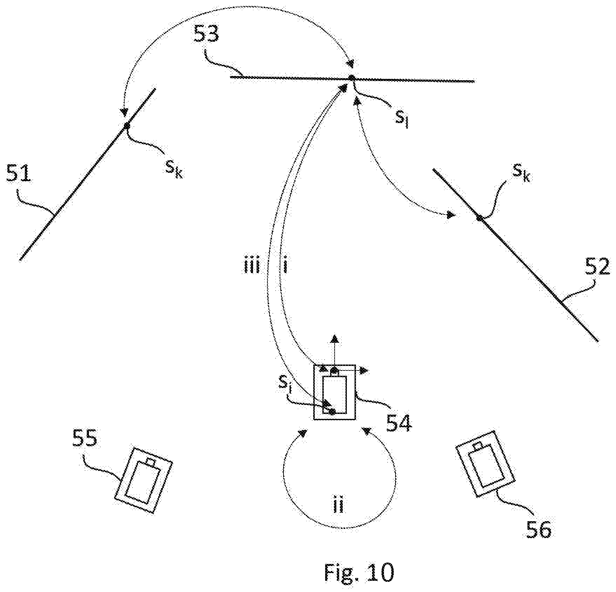

Im Folgenden wird die Qualität der Kalibrierung mit den ermittelten Parametern $\theta$ abgeschätzt und anhand der Fig. 10 erläutert. Seien alle möglichen unbekannten räumlichen Positionen der Merkmale 65 durch $s_i$ bezeichnet. Zu den Punkten $s_i$ zählen die Punkte der drei Targets 51, 52, 53, sowie die Punkte auf dem Würfel 21. Sei dann der Bildpunkt $p_{ij}$ die (durch das Pixelrauschen verrauschte) Abbildung des Merkmals $s_i$ im Bild j=1,...3, falls dieser in dem Bild zu sehen ist und irgendein Punkt sonst. Seien weiter die Gewichte $w_{ij}$ definiert als:

$w_{ij}$ = 1 dann und nur dann, wenn das Merkmal $s_i$ im Bild j zu sehen ist, und

$w_{ij}$ = 0 sonst.

Zu jeder Ansicht j=1,..3, gehört auch ein unbekannter Vektor $\theta_j$, der die intrinsischen sowie die extrinsischen Parameter der Referenzkamera 10 beinhaltet. Dabei sind die intrinsischen Parameter für alle drei Ansichten als gleich angenommen. Die Ansicht bzgl. des Positioniersockels 54 wird als Ursprung genommen und im Folgenden nicht als Parameter betrachtet.

Sind die Punkte $p_{ij}$ und $s_i$, wie oben beschrieben gegeben, so wird der Ausdruck

$$L(\theta) = \frac{1}{\left|2\sum w_{ij}\right|} \sum_j \sum_i w_{ij} \left\| p_{ij} - \mathrm{k}(s_i, \theta_j) \right\|^2$$

beginnend mit einem sinnvollen Startwert aus einer vorherigen oder initialen Kalibrierung minimiert.

Aus der Theorie der Photogrammmetrie bzw. Mehransichtengeometrie existiert unter gegebenen Voraussetzungen ein θ\*, bei dem L(θ\*) ein isoliertes Minimum aufweist. Dabei liegt L(θ\*) im Bereich des Rauschens der Merkmalsextraktion. Der Wert L(0\*) ist ein Qualitätsmerkmal des Verfahrens. Zusätzlich liegt das Minimum in einer zulässigen Region nicht weit der Startlösung. Trifft obiges nicht zu, so besteht der Verdacht einer Aufbauverstellung oder ein Defekt der Referenzkamera 10, und der Aufbau muss gewartet werden. Im positiven Fall (also, wenn alle obigen Bedingungen erfüllt sind), besitzen die darin enthaltenen Parameterwerte die folgende Interpretation, die in Fig. 10 veranschaulicht sind.

Die intrinsischen Parameter beschreiben eine Eichung bzw. Kamerakalibrierung der Referenzkamera 10. Damit muss diese nur einmalig für den Aufbau referenzkalibriert werden. Jede Messung liefert dann eine Nachbesserung der Parameter, passend zu den aktuellen Gegebenheiten (Verstellung, Umwelt, etc.) . Stimmen die Parameter signifikant nicht mit den Ausgangsparametern der Referenzkamera 10 überein, so besteht Verdacht auf mechanische Störung der Referenzkamera 10 oder des Aufbaus. Im letzteren Fall muss der Aufbau gewartet werden.

Die Punkte $s_i$ enthalten die für die Kalibrierung gesuchten 3D-Punkte auf den Targets im Koordinatensystem der Optik der Referenzkamera 10 (i) im Positioniersockel 54. Aus diesen kann die Qualität des Drucks, die Planarität der Targets, sowie die Lage der Targets zueinander ermittelt werden. Stimmen die Punkte nicht mit den vorher ermittelten oder festgelegten Werten signifikant überein, so besteht Verdacht auf mechanische Störung des Aufbaus oder der Referenzkamera 10. Im letzteren Fall muss der Aufbau gewartet werden.

Die Punkte $s_i$ enthalten aber auch die 3D-Punkte des Würfels, da diese aus den Positionen 55 und 56 gesehen (iii) werden. Da aber der Würfel hochgenau vermessen und der Bezug zur Referenzkamera 10 bekannt ist (ii), ist aus den vermessenen Punkten die Lage der Optik der Referenzkamera 10 gegenüber dem Positioniersockel 54 bekannt. Damit ist auch die Lage des Positioniersockels gegenüber den Punkten $s_i$ auf den Targets bekannt. In anderen Worten, man kann die Punkte $s_i$ nun in das Referenzkoordinatensystem des Positioniersockels 54 transferieren, wie es das oben beschriebene Kalibrierverfahren erfordert. Stimmen die ermittelten Verhältnisse des Positioniersockels zu den Targets nicht mit den vorherigen überein, so besteht Verdacht auf Verstellung des Adapters. Im letzteren Fall kann der Aufbau gewartet werden.

Werden die Qualitätskriterien der Kalibrierung der Referenzkamera 10 erfüllt, so werden die ermittelten Parameter auf einem Datenspeicher abgelegt und für die nachfolgenden Kalibrierungen der zu kalibrierenden Kameras herangezogen. Ist das nicht der Fall, so kann der Aufbau gewartet werden und/oder die Messung wiederholt werden.

Zur Umsetzung des obigen Verfahrens kann es notwendig sein, dass die Szene nicht degeneriert ist und die Lage der Kameras nicht einer kritischen Bewegung entsprechen.

Einer degenerierten Szene kann z.B. dadurch entgegengewirkt werden, dass drei planare Targets benutzt werden, die nicht zueinander ko-planar sind. Damit sind degenerierte Konfigurationen der Szene weitgehend ausgeschlossen.

Einer degenerierten Bewegung kann dadurch entgegengewirkt werden, dass die Kameras unterschiedliche Positionen haben und alle gegeneinander in allen Achsen verdreht sind.

Der Aufbau kann leicht gewartet werden, da jede Messung auch eine Eichung des Kalibriersystems (Referenzkamera 10) und Verifikation des Aufbaus mit sich bringt. Ist durch die Eichung eine größere Abweichung festgestellt worden, so muss das System gewartet bzw. nachgestellt werden. Weiterhin wird eine Fehlbedienung vermieden und Störquellen werden verringert. Hochgenau gefertigte planare Targets mit einem sehr genauen Druck sind für den Aufbau nicht notwendig. Der Aufbau passt sich kleinen Veränderungen im Druck und Planarität der Targets geeignet an. Insbesondere ist keine regelmäßige Neuvermessung der Targets erforderlich.

**Patentansprüche**

1. Aufbau zur Kalibrierung einer zu kalibrierenden Kamera (31) umfassend

    einen ersten Positioniersockel (43) zur Aufnahme eines Referenzkameraadapters (40) oder zur Aufnahme eines Adapters (34) für die zu kalibrierende Kamera (31),
    ein Hilfstarget (21),
    den Referenzkameraadapter (40) zur Aufnahme eines Referenzkameragehäuses (11) oder des Hilfstargets (21),
    den Adapter (34) zur Aufnahme der zu kalibrierenden Kamera (31),

einen zweiten Positioniersockel (41) zur Aufnahme des Referenzkameragehäuses (11),

mindestens ein Kalibriertarget (51, 52, 53), derart angeordnet, dass es von der vom ersten Positioniersockel (43) aufgenommenen Referenzkamera (11) oder zu kalibrierenden Kamera (31) erfasst werden kann,

das Referenzkameragehäuse (11) zur Aufnahme der Referenzkamera (12, 13)

wobei der erste Positioniersockel (43) derart angeordnet ist (Pos. 54), dass ein erstes von der im ersten Positioniersockel (43) aufgenommenen Referenzkamera (12, 13) erfasste Bild das mindestens eine Kalibriertarget (51, 52, 53) enthält, und

wobei der zweite Positioniersockel (41) derart angeordnet ist (Pos. 55 oder Pos. 56), dass ein zweites von der im zweiten Positioniersockel (41) aufgenommenen Referenzkamera (12, 13) erfasstes Bild das mindestens eine Kalibriertarget (51, 52, 53) und das im ersten Positioniersockel (43) aufgenommene Hilfstarget (21) enthält.

2. Aufbau nach Anspruch 1, ferner aufweisend einen dritten Positioniersockel (41) zur Aufnahme der Referenzkamera (11), derart angeordnet (Pos. 56 oder Pos. 55), dass ein drittes von der im dritten Positioniersockel (41) aufgenommenen Referenzkamera (12, 13) erfasstes Bild das mindestens eine Kalibriertarget (51, 52, 53) und das im ersten Positioniersockel (43) aufgenommene Hilfstarget (21) enthält.

3. Aufbau nach Anspruch 1 oder 2, wobei der Aufbau drei planare Kalibriertargets (51, 52, 53) aufweist, die zueinander nicht ko-planar angeordnet sind.

4. Aufbau nach einem der vorherigen Ansprüche, wobei der erste und der zweite Positioniersockel (43, 41) derart angeordnet und konfiguriert sind, dass bei einer Aufnahme der Referenzkamera (11) im ersten (43) verglichen mit einer Aufnahme im zweiten (41) Positioniersockel jeder der sechs räumlichen Freiheitsgrade der Pose der Referenzkamera (11) einen Unterschied aufweist.

5. Aufbau nach einem der vorherigen Ansprüche, wobei der erste Positioniersockel (43) einen ersten mechanischen Interfacetyp (44) zur Aufnahme des Referenzkameraadapters (40) oder zur Aufnahme des Adapters (34) für die zu kalibrierende Kamera (31) aufweist,

der Referenzkameraadapter einen zweiten mechanischen Interfacetyp (15; 24) zur Aufnahme der Referenzkamera (10, 11) oder des Hilfstargets (21) und ein erstes Interfacegegenstück (33) aufweist,

der Adapter (34) zur Aufnahme der zu kalibrierende Kamera (31) ein erstes Interfacegegenstück (33) aufweist,

der zweite Positioniersockel (41) einen zweiten mechanischen Interfacetyp (42) zur Aufnahme der Referenzkamera (10, 11) aufweist,

das Referenzkameragehäuse (11) ein zweites Interfacegegenstück (15) aufweist.

6. Aufbau nach einem der vorherigen Ansprüche, ferner aufweisend eine Auswerteeinheit, eingerichtet zur Bestimmung der extrinsischen und/oder intrinsischen Parameter der Referenzkamera (11, 12, 13) durch Auswertung zumindest des ersten und des zweiten Bildes.

7. Verfahren zum Vermessen eines Aufbaus zur Kalibrierung einer zu kalibrierenden Kamera (31), aufweisend die Schritte:

Positionieren (901) einer Referenzkamera (10, 11) auf einem ersten Positioniersockel (43, Pos. 55),

Erfassen (902) eines ersten Bildes des mindestens einen Kalibriertargets (51, 52, 53) mittels der Referenzkamera (10, 11),

Positionieren (903) eines Hilfstargets (21) auf dem ersten Positioniersockel,

Positionieren (904) der Referenzkamera (10, 11) auf einem zweiten Positioniersockel (41, Pos. 55),

Erfassen (905) eines zweiten Bildes des mindestens einen Kalibriertargets (51, 52, 53) und des Hilfstargets (21) mittels der Referenzkamera (10, 11),

Bestimmen (908) der Ausrichtung und der Position des Hilfstargets (21) zu dem mindestens einen Kalibriertarget (51, 52, 53) durch Auswerten des zweiten Bildes, und

Bestimmen von unbekannten Parametern der Referenzkamera durch Auswerten des ersten und des zweiten erfassten Bildes, wobei die extrinsischen Parameter aus dem ersten Bild und der relativen Ausrichtung und der Position des Hilfstargets (21) gegenüber dem ersten Kalibriertarget im zweiten Bild ermittelt werden.

8. Verfahren nach Anspruch 7, wobei die realen Abmessungen des Aufbaus aus erstem Positioniersockel (43), Interfaces (44, 15, 24), Referenzkameraadapter (40), Hilfstarget (21) und Referenzkamera (10, 11) vor dem Erfassen der Bilder mit der Referenzkamera (10, 11) vermessen werden.

**9.** Verfahren nach Anspruch 7 oder 8, aufweisend die Schritte

Positionieren (906) der Referenzkamera (10, 11) auf einem dritten Positioniersockel (41, Pos. 56),
Erfassen (907) eines dritten Bildes des mindestens einen Kalibriertargets (51, 52, 53) und des Hilfstargets (21) mittels der Referenzkamera (10, 11),
Bestimmung der unbekannten Parameter der Referenzkamera durch Auswerten aller erfassten Bilder,
Ermitteln (909) eines Qualitätswertes der intrinsischen Parameter, und
Speichern (910) der intrinsischen Parameter, wenn der Qualitätswert einer Vorgabe entspricht.

**10.** Verfahren nach Anspruch 7, 8 oder 9, wobei mindestens zwei Kalibriertargets (51, 52, 53) verwendet werden, das erste Bild die mindestens zwei Kalibriertargets (51, 52, 53) enthält und das zweite Bild die mindestens zwei Kalibriertargets (51, 52, 53) und das Hilfstarget (21) enthält, aufweisend den Schritt
Bestimmen der Ausrichtung aller Kalibriertargets (51, 52, 53) untereinander.

**11.** Programmelement, das, wenn es auf einer Steuereinheit eines Computers ausgeführt wird, das Auswerten der Bilder und Bestimmen der ersten Position relativ zu den zwei Kalibriertargets durch Auswertung der erfassten Bilder nach Anspruch 10 durchführt.

**12.** Computerlesbares Medium, auf welchem ein Programmelement nach Anspruch 11 gespeichert ist.

## Claims

**1.** Assembly for calibrating a camera (31) to be calibrated, comprising

a first positioning base (43) for receiving a reference camera adapter (40) or for receiving an adapter (34) for the camera (31) to be calibrated,
an auxiliary target (21),
the reference camera adapter (40) for receiving a reference camera housing (11) or the auxiliary target (21),
the adapter (34) for receiving the camera (31) to be calibrated,
a second positioning base (41) for receiving the reference camera housing (11),
at least one calibration target (51, 52, 53), arranged in such a way that it can be captured by the camera (31) to be calibrated or the reference camera (11) received by the first positioning base (43),
the reference camera housing (11) for receiving the reference camera (12, 13),
wherein the first positioning base (43) is arranged (position 54) in such a way that a first image captured by the reference camera (12, 13) received in the first positioning base (43) contains the at least one calibration target (51, 52, 53), and
wherein the second positioning base (41) is arranged (position 55 or position 56) in such a way that a second image captured by the reference camera (12, 13) received in the second positioning base (41) contains the at least one calibration target (51, 52, 53) and the auxiliary target (21) received in the first positioning base (43).

**2.** Assembly according to Claim 1, furthermore comprising a third positioning base (41) for receiving the reference camera (11), arranged (position 56 or position 55) in such a way that a third image captured by the reference camera (12, 13) received in the third positioning base (41) contains the at least one calibration target (51, 52, 53) and the auxiliary target (21) received in the first positioning base (43).

**3.** Assembly according to Claim 1 or 2, wherein the assembly comprises three planar calibration targets (51, 52, 53) arranged in a non-coplanar fashion with respect to one another.

**4.** Assembly according to any of the preceding claims, wherein the first and second positioning bases (43, 41) are arranged and configured in such a way that in the event of the reference camera (11) being received in the first positioning base (43) compared with being received in the second positioning base (41), each of the six spatial degrees of freedom of the pose of the reference camera (11) has a difference.

**5.** Assembly according to any of the preceding claims, wherein the first positioning base (43) has a first mechanical interface type (44) for receiving the reference camera adapter (40) or for receiving the adapter (34) for the camera (31) to be calibrated,

the reference camera adapter has a second mechanical interface type (15; 24) for receiving the reference camera (10, 11) or the auxiliary target (21) and has a first interface counterpart (33),

the adapter (34) for receiving the camera (31) to be calibrated has a first interface counterpart (33),

the second positioning base (41) has a second mechanical interface type (42) for receiving the reference camera (10, 11),

the reference camera housing (11) has a second interface counterpart (15).

6. Assembly according to any of the preceding claims, furthermore comprising an evaluation unit, designed for determining the extrinsic and/or intrinsic parameters of the reference camera (11, 12, 13) by evaluating at least the first and second images.

7. Method for measuring an assembly for calibrating a camera (31) to be calibrated, comprising the following steps:

positioning (901) a reference camera (10, 11) on a first positioning base (43, position 55),

capturing (902) a first image of the at least one calibration target (51, 52, 53) by means of the reference camera (10, 11),

positioning (903) an auxiliary target (21) on the first positioning base,

positioning (904) the reference camera (10, 11) on a second positioning base (41, position 55),

capturing (905) a second image of the at least one calibration target (51, 52, 53) and of the auxiliary target (21) by means of the reference camera (10, 11),

determining (908) the orientation and the position of the auxiliary target (21) with respect to the at least one calibration target (51, 52, 53) by evaluating the second image, and

determining unknown parameters of the reference camera by evaluating the first and second captured images, wherein the extrinsic parameters are ascertained from the first image and the relative orientation and the position of the auxiliary target (21) in relation to the first calibration target in the second image.

8. Method according to Claim 7, wherein the real dimensions of the assembly constituted by first positioning base (43), interfaces (44, 15, 24), reference camera adapter (40), auxiliary target (21) and reference camera (10, 11) are measured prior to capturing the images by way of the reference camera (10, 11).

9. Method according to Claim 7 or 8, comprising the following steps:

positioning (906) the reference camera (10, 11) on a third positioning base (41, position 56),

capturing (907) a third image of the at least one calibration target (51, 52, 53) and of the auxiliary target (21) by means of the reference camera (10, 11),

determining the unknown parameters of the reference camera by evaluating all the captured images,

ascertaining (909) a quality value of the intrinsic parameters, and

storing (910) the intrinsic parameters if the quality value corresponds to a predefined specification.

10. Method according to Claim 7, 8 or 9, wherein at least two calibration targets (51, 52, 53) are used, the first image contains the at least two calibration targets (51, 52, 53), and the second image contains the at least two calibration targets (51, 52, 53) and the auxiliary target (21), comprising the following step:
determining the orientation of all the calibration targets (51, 52, 53) among one another.

11. Program element which, when executed on a control unit of a computer, carries out the evaluation of the images and determination of the first position relative to the two calibration targets by evaluating the captured images according to Claim 10.

12. Computer-readable medium on which a program element according to Claim 11 is stored.

**Revendications**

1. Montage pour l'étalonnage d'une caméra (31) à étalonner, comprenant

un premier socle de positionnement (43) destiné à accueillir un adaptateur de caméra de référence (40) ou à accueillir un adaptateur (34) pour la caméra (31) à étalonner,
une cible auxiliaire (21),

l'adaptateur de caméra de référence (40) destiné à accueillir un boîtier de caméra de référence (11) ou la cible auxiliaire (21),

l'adaptateur (34) destiné à accueillir la caméra (31) à étalonner,

un deuxième socle de positionnement (41) destiné à accueillir le boîtier de caméra de référence (11),

au moins une cible d'étalonnage (51, 52, 53), disposée de telle sorte qu'elle peut être capturée par la caméra de référence (11) accueillie par le premier socle de positionnement (43) ou par la caméra (31) à étalonner,

le boîtier de caméra de référence (11) destiné à accueillir la caméra de référence (12, 13),

le premier socle de positionnement (43) étant disposé de telle sorte (Pos. 54) qu'une première image capturée par la caméra de référence (12, 13) accueillie dans le premier socle de positionnement (43) contient l'au moins une cible d'étalonnage (51, 52, 53) et

le deuxième socle de positionnement (41) étant disposé de telle sorte (Pos. 55 ou Pos. 56) qu'une deuxième image capturée par la caméra de référence (12, 13) accueillie dans le deuxième socle de positionnement (41) contient l'au moins une cible d'étalonnage (51, 52, 53) et la cible auxiliaire (21) accueillie dans le premier socle de positionnement (43).

2. Montage selon la revendication 1, possédant en outre un troisième socle de positionnement (41) destiné à accueillir la caméra de référence (11), disposé de telle sorte (Pos. 56 ou Pos. 55) qu'une troisième image capturée par la caméra de référence (12, 13) accueillie dans le troisième socle de positionnement (41) contient l'au moins une cible d'étalonnage (51, 52, 53) et la cible auxiliaire (21) accueillie dans le premier socle de positionnement (43).

3. Montage selon la revendication 1 ou 2, le montage possédant trois cibles d'étalonnage (51, 52, 53) planes qui sont disposées de manière coplanaire les unes par rapport aux autres.

4. Montage selon l'une des revendications précédentes, le premier et le deuxième socle de positionnement (43, 41) étant disposés et configurés de telle sorte que lors d'un accueil de la caméra de référence (11) dans le premier (43) en comparaison d'un accueil dans le deuxième (41) socle de positionnement, chacun des six degrés de liberté dans l'espace de la posture de la caméra de référence (11) présente une différence.

5. Montage selon l'une des revendications précédentes, le premier socle de positionnement (43) possédant un premier type d'interface mécanique (44) destiné à accueillir l'adaptateur de caméra de référence (40) et destiné à accueillir l'adaptateur (34) pour la caméra (31) à étalonner,

l'adaptateur de caméra de référence possédant un deuxième type d'interface mécanique (15 ; 24) destiné à accueillir la caméra de référence (10, 11) ou la cible auxiliaire (21) et une première pièce homologue d'interface (33),

l'adaptateur (34) destiné à accueillir la caméra (31) à étalonner possédant une première pièce homologue d'interface (33),

le deuxième socle de positionnement (41) possédant un deuxième type d'interface mécanique (42) destiné à accueillir la caméra de référence (10, 11),

le boîtier de caméra de référence (11) possédant une deuxième pièce homologue d'interface (15).

6. Montage selon l'une des revendications précédentes, possédant en outre une unité d'interprétation, conçue pour déterminer les paramètres extrinsèques et/ou intrinsèques de la caméra de référence (11, 12, 13) par interprétation d'au moins la première et la deuxième image.

7. Procédé de mesurage d'un montage pour l'étalonnage d'une caméra (31) à étalonner, comprenant les étapes suivantes :

positionnement (901) d'une caméra de référence (10, 11) sur un premier socle de positionnement (43, Pos. 55),

capture (902) d'une première image de l'au moins une cible d'étalonnage (51, 52, 53) au moyen de la caméra de référence (10, 11),

positionnement (903) d'une cible auxiliaire (21) sur le premier socle de positionnement,

positionnement (904) de la caméra de référence (10, 11) sur un deuxième socle de positionnement (41, Pos. 55),

capture (905) d'une deuxième image de l'au moins une cible d'étalonnage (51, 52, 53) et de la cible auxiliaire (21) au moyen de la caméra de référence (10, 11), détermination (908) de l'orientation et de la position de la cible auxiliaire (21) par rapport à l'au moins une cible d'étalonnage (51, 52, 53) par interprétation de la deuxième image, et

détermination de paramètres inconnus de la caméra de référence par interprétation de la première et de la deuxième image capturée, les paramètres extrinsèques étant identifiés à partir de la première image et de l'orientation et la position relatives de la cible auxiliaire (21) par rapport à première cible d'étalonnage dans la deuxième image.

8. Procédé selon la revendication 7, les dimensions réelles du montage composé du premier socle de positionnement (43), des interfaces (44, 15, 24), de l'adaptateur de caméra de référence (40), de la cible auxiliaire (21) et de la caméra de référence (10, 11) étant mesurées avant la capture des images par la caméra de référence (10, 11).

9. Procédé selon la revendication 7 ou 8, comprenant les étapes suivantes :

   positionnement (906) de la caméra de référence (10, 11) sur un troisième socle de positionnement (41, Pos. 56), capture (907) d'une troisième image de l'au moins une cible d'étalonnage (51, 52, 53) et de la cible auxiliaire (21) au moyen de la caméra de référence (10, 11), détermination des paramètres inconnus de la caméra de référence par interprétation de toutes les images capturées,
   identification (909) d'une valeur de qualité des paramètres intrinsèques et
   mémorisation (910) des paramètres intrinsèques lorsque la valeur de qualité correspond à une consigne.

10. Procédé selon la revendication 7, 8 ou 9, au moins deux cibles d'étalonnage (51, 52, 53) étant utilisées, la première image contenant les au moins deux cibles d'étalonnage (51, 52, 53) et la deuxième image contenant les au moins deux cibles d'étalonnage (51, 52, 53) et la cible auxiliaire (21), comprenant l'étape suivante :
    détermination de l'orientation de toutes les cibles d'étalonnage (51, 52, 53) entre elles.

11. Élément de programme qui, lorsqu'il est exécuté sur une unité de commande d'un ordinateur, effectue l'interprétation des images et la détermination de la première position par rapport à la deuxième cible d'étalonnage par interprétation des images capturées selon la revendication 10.

12. Support lisible par ordinateur sur lequel est enregistré un élément de programme selon la revendication 11.

Fig. 1

Fig. 2

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

**In der Beschreibung aufgeführte Patentdokumente**

- US 2017374360 A1